# EUROPÄISCHE PATENTSCHRIFT

(11) **EP 2 297 809 B1**
(45) Veröffentlichungstag und Bekanntmachung des Hinweises auf die Patenterteilung: **08.02.2012**
(21) Anmeldenummer: 08875075.7
(22) Anmeldetag: 10.12.2008
(51) Int. Cl.: H01M 8/10, C08J 5/22, B01D 67/00, B01D 69/12, B01D 71/38

(54) **VERFAHREN ZUM HERSTELLEN EINER PROTONENLEITFÄHIGEN, STRUKTURIERTEN ELEKTROLYTMEMBRAN**
METHOD FOR PRODUCING A PROTON-CONDUCTIVE, STRUCTURED ELECTROLYTE MEMBRANE
PROCÉDÉ DE FABRICATION D'UNE MEMBRANE ÉLECTROLYTIQUE STRUCTURÉE CONDUISANT LES PROTONS

(30) Priorität: 09.07.2008 EP 08012393
(43) Veröffentlichungstag der Anmeldung: 23.03.2011
(73) Patentinhaber: Micronas GmbH, 79108 Freiburg i. Br. (DE)
(72) Erfinder: ERDLER, Gilbert, 76275 Ettlingen (DE); REINECKE, Holger, 79312 Emmendingen (DE); MÜLLER, Claas, 79104 Freiburg (DE); FRANK, Mirko, 72250 Freudenstadt (DE); KERRES, Jochen, 73760 Ostfildern (DE)
(74) Vertreter: Müller, Wolf-Christian
(86) Internationale Anmeldenummer: PCT/EP2008/010477
(87) Internationale Veröffentlichungsnummer: WO 2010/003446

(56) Entgegenhaltungen:
- JP-A- 2008 037 897
- US-A1- 2006 127 727
- US-A1- 2008 003 485

## Beschreibung

Die Erfindung betrifft ein Verfahren zum Herstellen einer protonenleitfähigen, strukturierten Elektrolytmembran, insbesondere für eine Brennstoffzelle.

Batterien und Akkumulatoren lassen sich durch Brennstoffzellen ersetzen. Diese weisen üblicherweise einen Wasserstoffspeicher, eine als Anode dienende erste Elektrode, eine als Kathode dienende zweite Elektrode und eine zwischen den Elektroden befindliche Membran auf, die mit dem Wasserstoffspeicher verbunden ist. Die Membran ist für Protonen durchlässig und für Wasserstoff undurchlässig. Bei Mikrobrennstoffzellen wird meist eine unter der Bezeichnung DuPont™ Nafion^{®} PFSA Membran im Handel erhältliche Folie als Elektrolytmembran verwendet. Die Elektrolytmembran enthält chemisch stabilisierte Sulfonsäuregruppen, die eine hohe lonenleitfähigkeit ermöglichen

Bei einem aus der Praxis bekannten Verfahren wird bei der Herstellung der Brennstoffzelle die Folie durch Zuschneiden strukturiert und in die benötigte Form gebracht. Danach wird die Folie zwischen den Elektroden angeordnet. Üblicherweise werden mehrere solcher Brennstoffzellen übereinander gestapelt und in Reihe geschaltet. Die Folie hatjedoch den Nachteil, dass sie nur eine begrenzte Miniaturisierung der Brennstoffzelle ermöglicht, weil die strukturierte Folie nur noch schlecht handhabbar ist, wenn ihre Abmessungen klein sind. Ungünstig ist außerdem, dass beim Zurechtschneiden der Folie Toleranzen auftreten, welche die Miniaturisierung der Brennstoffzelle erschweren.

In T. Pinochat et al., "A new proton-conducting porous silicon membrane for small fuel cells", Chemical Engineering Journal 101 (2004), Seite 107-111 ist ferner ein Verfahren zum Herstellen einer strukturierten Elektrolytmembran bekannt, bei dem ein Silizium-Wafer beidseitig mit einer durch Sputtern aufgetragenen metallischen Schicht beschichtet wird. Auf diese Schicht wird dann eine Maske aus einem Fotolack aufgebracht und danach wird an den Stellen, an denen kein Fotolack angeordnet ist, die Wandstärke des Wafers durch beidseitiges Ätzen des Siliziums reduziert, um eine offenporige Silizium-Membran zu bilden, die eine Fläche von etwa 3 mm x 3 mm aufweist. Die Silizium-Membran wird dann mit einer Nafion^{®}-Lösung befüllt und danach wird das darin enthaltene Lösungsmittel verdunstet, so dass nur noch das Nafion^{®} in den Poren zurückbleibt. Auch dieses Verfahren ermöglicht nur eine begrenzte Miniaturisierung der Membran, da das Beladen der Silizium-Membran mit der Nafion^{®}-Lösung bei kleinen Membranabmessungen schwierig ist.

Es besteht deshalb die Aufgabe, ein Verfahren der eingangs genannten Art zu schaffen, das auf einfache Weise einen hohen Miniaturisierungsgrad der Elektrolytmembran ermöglicht.

Diese Aufgabe wird durch ein Verfahren zum Herstellen einer protonenleitfähigen, strukturierten Elektrolytmembran, insbesondere für eine Brennstoffzelle, gelöst, bei dem auf eine Festkörperoberfläche eine Beschichtung aufgebracht wird,
- wobei die Beschichtung zumindest eine ionenleitfähige, wenigstens eine Säuregruppe aufweisende Vemetzungskomponente und mindestens eine damit zusammenwirkende photoaktive Substanz enthält, wobei die Beschichtung optisch maskiert wird, indem mindestens ein Bereich der Beschichtung, in dem die Elektrolytmembran sein soll, derart belichtet wird, dass die Vernet zungskomponente mit der photoaktiven Substanz zu einem an der Festkörperoberfläche anhaftenden Polymer- und/oder Copolymernetzwerk vernetzt, wobei danach zum Strukturieren der Elektrolytmembran mindestens ein unbelichteter Bereich der Beschichtung entfernt wird,
und/oder
- wobei die Beschichtung zumindest eine ionenleitfähige, wenigstens eine Säuregruppe aufweisende Vemetzungskomponente und mindestens eine damit zusammenwirkende photoaktive Substanz enthält, die nach dem Aufbringen auf die Festkörperoberfläche zu einem an der Festkörperoberfäche anhaftenden, hydophoben Polymer- und/oder Copolymernetzwerk vernetzt werden, wobei die Beschichtung optisch maskiert wird, indem mindestens ein Bereich der Beschichtung, in dem die Elektrolytmembran nicht sein soll, derart belichtet wird, dass er durch eine chemische Reaktion hydrophil wird, wobei danach zum Strukturieren der Elektrolytmembran der mindestens eine belichtete Bereich der Beschichtung entfernt wird,
und/oder
- wobei die Beschichtung zumindest eine ionenleitfähige, wenigstens eine Säuregruppe aufweisende Vernetzungskomponente und mindestens eine damit zusammenwirkende photoaktive Substanz enthält, die nach dem Aufbringen auf die Festkörperoberfläche zu einem an der Festkörperoberfläche anhaftenden, hydophilen Polymer- und/oder Copolymernetzwerk vernetzt werden, wobei die Beschichtung optisch maskiert wird, indem mindestens ein Bereich der Beschichtung, in dem die Elektrolytmembran sein soll, derart belichtet wird, dass er durch eine chemische Reaktion hydrophob wird, wobei danach zum Strukturieren der Elektrolytmembran mindestens ein unbelichteter Bereich der Beschichtung entfernt wird
und/oder
- wobei die Beschichtung zumindest eine ionenleitfähige, wenigstens eine Säuregruppe aufweisende Vernetzungskomponente enthält, die nach dem Aufbringen auf die Festkörperoberfläche zu einem an der Festkörperoberfläche anhaftenden Polymer- und/oder Copolymernetzwerk vernetzt wird, wobei die Beschichtung optisch maskiert wird, indem mindestens ein Bereich der Beschichtung, in dem die Elektrolytmembran nicht sein soll, derart belichtet wird, dass Polymer- und/oder Copolymerketten gebrochen werden, wobei danach zum Strukturieren der Elektrolytmembran der mindestens eine belichtete Bereich der Beschichtung entfernt wird.

In vorteilhafter Weise wird bei dem erfindungsgemäßen Verfahren die auf die Festkörperoberfläche aufgebrachte Beschichtung mittels eines Standard-Lithographieprozesses strukturiert. Dabei wird bevorzugt an den Stellen, an denen optische Strahlung, wie z.B. UV-Licht, auf die Beschichtung auftriftt, die photoaktive Substanz aktiviert und dadurch eine Kreuzvernetzung gestartet. Es ist aber auch möglich, auf der Festkörperoberfläche zunächst ein hydrophiles Polymer- und/oder Copolymernetzwerk flächig aufzubringen und dann diejenigen Stellen zu belichten, an denen die Elektrolytmembran sein soll (Positivfotolack), um die Beschichtung an den belichteten Stellen durch eine chemische Reaktion hydrophob zu machen. Die nicht belichteten Bereiche der Beschichtung werden anschließend entfernt, beispielsweise durch flächiges Inkontaktbringen der Beschichtung mit einem Entwickler, in dem sich die unvernetzte Vernetzungskomponente und ggf. die photoaktive Substanz bzw. die hydrophilen Stellen lösen.

Ferner besteht die Möglichkeit, auf der Festkörperoberfläche zunächst ein hydrophobes Polymer- und/oder Copolymernetzwerk aufzubringen und dann diejenigen Stellen zu belichten, an denen die Elektrolytmembran nicht sein soll (Negativfotolack), um die Beschichtung an den belichteten Stellen durch eine chemische Reaktion hydrophil zu machen. Die belichteten, hydrophilen Bereiche der Beschichtung werden anschließend entfernt, vorzugsweise durch flächiges Inkontaktbringen der Beschichtung mit einem Entwickler.
Alternativ kann auf der Festkörperoberfläche auch ein Polymer- und/oder Copolymernetzwerk flächig aufgebracht werden. Danach werden an den Stellen, an denen die Elektrolytmembran nicht sein soll, in der Beschichtung enthaltene Polymer- und/oder Copolymerketten durch Belichten mit energiereicher Strahlung aufgebrochen, um sie anschließende durch Inkontaktbringen mit einem Entwickler in diesem zu lösen und von der Festkörperoberfläche zu entfernen.
Mit Hilfe des Verfahrens kann eine fein strukturierte Elektrolytmembran mit sehr kompakten Abmessungen hergestellt werden.

Bei einer vorteilhaften Ausführungsform des Verfahrens werden die Vernetzungskomponente und die mindestens eine photoaktive Substanz in einem Lösungsmittel gelöst auf die Festkörperoberfläche vorzugsweise durch Spin Coating aufgetragen, und danach wird das Lösungsmittel zum Bilden der Beschichtung verdunstet. Die Beschichtung wird also mit einem in der Halbleiterindustrie etablierten und erprobten Verfahrensschritt, nämlich dem Spin Coating aufgetragen. Das Verfahren kann somit gut in einen Standard-Halbleiterfertigungsprozess integriert werden.

Die Vernetzungskomponente weist vorzugsweise mindestens eine Säuregruppe auf, insbesondere eine Sulfonsäuregruppe, eine Phosporsäuregruppe und/oder eine Carbonsäuregruppe. Die nach dem Verfahren hergestellte Elektrolytmembran weist dann eine hohe Protonenleitfähigkeit auf

Vorteilhaft ist, wenn die Vernetzungskomponente sulfoniertes Polyetherketon und/oder sulfoniertes Polyetheretherketon enthält. Das sulfonierte Polyetheretherketon kann folgende Strukturformeln aufweisen:

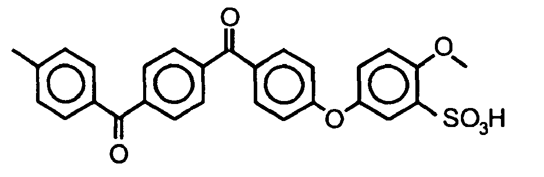

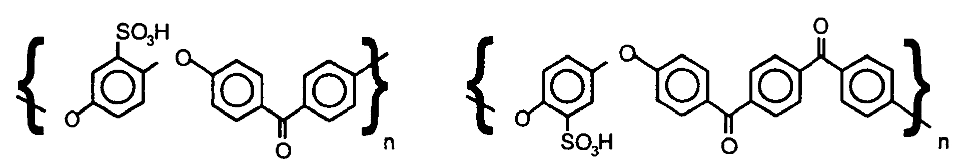

Die Elektrolytmembran weist dann eine noch größere Protonenleitfähigkeit auf

Bei einer bevorzugten Ausgestaltung der Erfindung enthält die photoaktive Substanz einen Photoinitiator, insbesondere 2,4,6-Trimethylbenzoyldiphenylphosphinoxid. Dieser Photoinitiator ist unter der Bezeichnung Lucirin^{®} TPO-L im Handel erhältlich und weist folgende Strukturformel auf

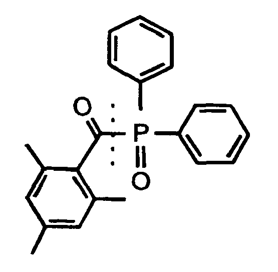

Zweckmäßigerweise enthält die photoaktive Substanz ein Copolymer, insbesondere Trimethylolpropantriacetat. Dieses Copolymer ist unter der Bezeichnung Laromer^{®} TMPTA im Handel erhältlich und weist folgeende Strukturformel auf

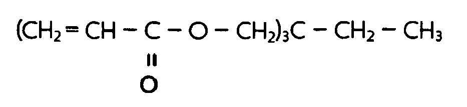

Vorteilhaft ist, wenn die Beschichtung eine Haftvermittlerkomponente enthält, vorzugsweise Polybenzimidazol. Dadurch kann die Haftung der Elektrolytmembran insbesondere auf einem in ein Siliziumsubstrat integrierten Metallhydridwasserstoffspeicher verbessert werden. Die Strukturformel von Polybenzimidazol lautet: ([NH-C=CH-C=CH-CH=C-N=C-]2-[C=CH-C=CH-CH=CH-])n bzw.

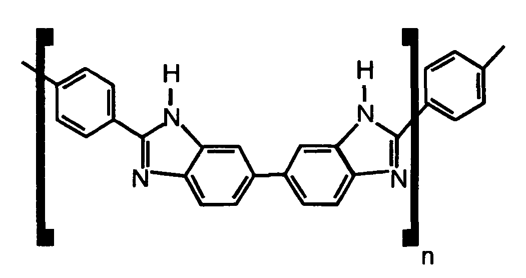

Das erfindungsgemäße Verfahren kann in ein Verfahren zum Herstellen mindestens einer Brennstoffzelle integriert sein, bei dem ein Halbleitersubstrat bereitgestellt wird, auf das eine Wasserstoffspeicherschicht ausgebildet wird, wobei die Elektrolytmembran auf der Wasserstoffspeicherschicht ausgebildet wird und wobei auf der gegenüberliegenden Seite der Elektrolytmembran eine für Luft und/oder Sauerstoff durchlässige Kathode ausgebildet wird. Mit dem Verfahren kann also eine Brennstoffzelle monolithisch in ein Halbleitersubstrat integriert werden. Dabei ist es sogar möglich, mehrere Brennstoffzellen nebeneinander in das Halbleitersubstrat zu integrieren und elektrisch in Reihe zu schalten. Das Halbleitersubstrat ist vorzugsweise ein Siliziumsubstrat. Die Wasserstoffspeicherschicht enthält bevorzugt Palladium, das mittels eines üblichen Galvanikverfahrens, Siebdruck und/oder eines Dünnschichtverfahrens, wie Aufsputtern oder Aufdampfen, auf das Halbleitersubstrat aufgebracht wird. Das erfindungsgemäße Verfahren kann insbesondere in einem CMOS-Prozess angewendet werden.

Bei einer Ausführungsform der Erfindung wird die Beschichtung vor dem Belichten als Folie von der Festkörperoberfläche abgelöst und danach derart auf der zumindest aus dem Halbleitersubstrat und der Wasserstoffspeicherschicht gebildeten Anordnung positioniert wird, dass die Folie die Wasserstoffspeicherschicht flächig überdeckt. Auch bei dieser Ausführungsform der Erfindung wird die Beschichtung direkt auf der Wasserstoffspeicherschicht bzw. dem Halbleitersubstrat strukturiert. Wegen der einfacheren Integration in einen Halbleiterfertigungsprozess wird es jedoch bevorzugt, die Beschichtung mittels Spin Coating auf die zumindest aus dem Halbleitersubstrat und der Wasserstoffspeicherschicht gebildete Anordnung aufzubringen.

Vorteilhaft ist, wenn in dem Halbleitersubstrat eine Kavität oder Grube ausgebildet wird, und wenn die Grube mit der Wasserstoffspeicherschicht befüllt wird. Die mindestens eine Brennstoffzelle kann dadurch planar in das Halbleitersubstrat integriert werden.

Bei einer bevorzugten Ausgestaltung der Erfindung wird in der Grube eine Stress-Kompensationsschicht aus einem duktilen Metall ausgebildet, wobei die Wasserstoffspeicherschicht auf die Stress-Kompensationsschicht aufgebracht wird. Dadurch wird vermieden, dass in der monolithisch in das Halbleitersubstrat integrierten Brennstoffzelle insbesondere bei einer relativ dicken Wasserstoffspeicherschicht Risse auftreten, wenn die Wasserstoffspeicherschicht beim Be- und/oder Entladen des Wasserstoffs ihr Volumen verändert. Das duktile Metall kann insbesondere Zinn, Gold, Silber, Blei, Kadmium und/oder Indium enthalten. Zinn wird wegen seiner Umweltverträglichkeit besonders bevorzugt.

Vorteilhaft ist, wenn in der Grube eine Diffusionsbarriere zum Hemmen oder Sperren des Durchtritts von Wasserstoff ausgebildet wird, wobei die Wasserstoffspeicherschicht und ggf. die Kompensationsschicht auf der Diffusionsbarriere ausgebildet wird. Die Brennstoffzelle kann dann über einen langen Zeitraum weitgehend verlustfrei Wasserstoff speichern.

Nachfolgend sind Ausführungsbeispiele der Erfindung anhand der Zeichnung näher erläutert. Es zeigt:
- Fig. 1A bis 11: Verfahrensschritte zur Herstellung eines mehrere Brennstoffzellen aufweisenden Halbleiterchips, und
- Fig. 2: schematisch eine Seitenansicht einer geschnittenen Brennstoffzelle sowie in einzelnen der Brennstoffzellenbereiche Reaktionsformeln zur Veranschaulichung der beim Entladen ablaufenden chemischen Reaktion.

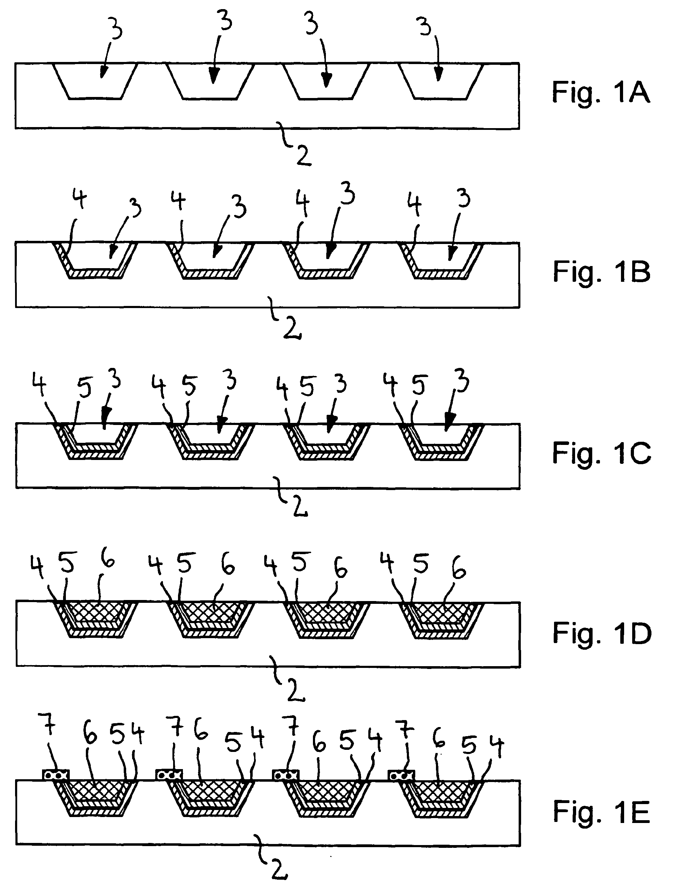

Bei einem Verfahren zum Herstellen von Brennstoffzellen 1 wird ein Halbleitersubstrat 2 aus Silizium bereitgestellt, in dessen Oberfläche eine der Anzahl der herzustellenden Brennstoffzellen 1 entsprechende Anzahl von Kavitäten oder Gruben 3 ausgebildet wird, die seitlich voneinander beabstandet sind (Fig. 1 A).

Die Gruben können beispielsweise durch nasschemisches Ätzen mit KOH- oder Trockenätzen in das Halbleitersubstrat 2 eingebracht werden. Dabei wird auf die Oberfläche des Halbleitersubstrats 2 zunächst eine ätzfeste Maske aufgebracht, die an den Stellen, an denen die Gruben 3 sein sollen, jeweils eine Öffnung aufweist. Danach wird die Oberfläche der aus dem Halbleitersubstrat 2 und der Ätzmaske bestehenden Anordnung ganzflächig mit einem Ätzmittel in Kontakt gebracht, wobei an den Stellen, an denen Öffnungen sind, durch eine chemische Reaktion zwischen dem Ätzmittel und dem Halbleitersubstrat 2 Material von dem Halbleitersubstrat 2 abgetragen wird. Nachdem die Gruben 3 mit den gewünschten Abmessungen in das Halbleitersubstrat 2 eingeätzt wurden, werden das Ätzmittel und die ätzfeste Maske vom Halbleitersubstrat 2 entfernt.

In einem weiteren Verfahrensschritt wird in den Gruben 3 jeweils eine Diffusionsbarriere 4 zum Hemmen oder Sperren des Durchtritts von Wasserstoff ausgebildet. In Fig. 1B ist erkennbar, dass die Diffusionsbarrieren 4 den Boden und die Seitenwände der Gruben 3 vollständig bedecken.

Anschließend wird auf die Diffusionsbarrieren 4 eine Stress-Kompensationsschicht 5 aus einem duktilen Metall, wie z.B. Zinn ausgebildet (Fig. 1C). Die den einzelnen Gruben 3 zugeordneten Stress-Kompensationsschichten 5 bedecken jeweils den Boden und die Seitenwände der Gruben 3 vollständig.

Es ist aber auch möglich, zuerst die Diffusionsbarrieren 4 auf dem Halbleitersubstrat 2 und danach die Stress-Kompensationsschichten 5 auf den Diffusionsbarrieren 4 auszubilden.

In einem in Fig. 1D dargestellten weiteren Verfahrensschritt werden die verbleibenden Gruben 3 mit einer Wasserstoffspeicherschicht 6 aus Palladium befüllt, beispielsweise mittels eines üblichen Galvanikverfahrens. Anschließend erfolgt ein Planarisieren der Oberfläche mittels einer Poliermaschine, um eine durchgehend ebene Oberfläche über das Halbleitersubstrat 2, die Wasserstoffspeicherschichten 6 und die an die Oberfläche ragenden Ränder der Stress-Kompensationsschichten 5 und der Diffusionsbarrieren 4 zu erhalten.

Danach werden als Anoden für die Brennstoffzellen 1 erste elektrische Elektroden 7 derart auf die Oberfläche aufgebracht, dass diese jeweils eine der Wasserstoffspeicherschichten 6 elektrisch kontaktieren. Dazu wird die Oberfläche an den Stellen, an denen die ersten elektrischen Elektroden 7 nicht sein sollen, mittels eines Lithographischritts zunächst mit einer Maske abgedeckt und danach wird eine elektrische Kontaktschicht, beispielsweise eine Goldschicht, flächig auf die Oberfläche aufgedampft. Diese wird durch Entfernen der Maske strukturiert, um die ersten Elektroden 7 zu bilden (Fig. 1 E).

In einem weiteren Verfahrensschritt wird eine Lösung bereitgestellt, die folgende Komponenten enthält:
a) Eine ionenleitfähige, wenigstens eine Säuregruppe aufweisende, Vernetzungskomponente, nämlich sulfoniertes Polyetheretherketon,
b) eine photoaktive Substanz, die einen Photoinitiator, nämlich 2,4,6-Trimethylbenzoyldiphenylphosphinoxid, und ein Copolymer, nämlich Trimethylolproantriacetat, aufweist,
c) ggf eine Haftvermitterkomponente, nämlich Polybenzimidazol, und
d) ein Lösungsmittel.

Die Lösung wird vorzugsweise dadurch erhalten, dass die Komponenten miteinander vermischt und das Gemisch solange gerührt wird, bis sich die Komponenten a), b) und ggf c) vollständig in dem Lösungsmittel gelöst haben.

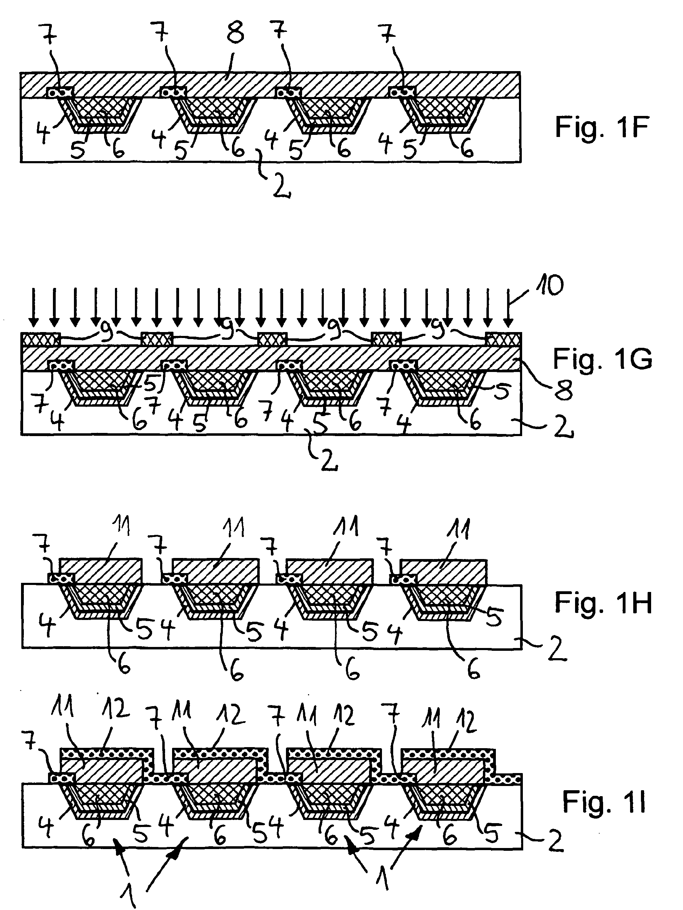

Die so erhaltene Lösung wird nun mittels Spin Coating ganzflächig auf die Festkörperoberfläche der aus dem Halbleitersubstrat 2, den Diffusionsbarrieren 4, den Stress-Kompensationsschichten 5, den Wasserstoffspeicherschichten 6 und den ersten Elektroden 7 bestehenden Anordnung aufgebracht. Dann wird das Lösungsmittel unter Wärmeeinwirkung verdunstet, so dass nur die Komponenten a), b) und ggf c) als Beschichtung 8 auf der Festkörperoberfläche verbleiben (Fig. 1 F).

In einem weiteren Verfahrensschritt wird auf die Beschichtung 8 mittels eines Lithographieschritts eine Fotomaske 9 aufgebracht, die diejenigen Stellen abdeckt, an denen keine Elektrolytmembran sein soll (Fig. 1G).

Danach wird die Beschichtung 8 durch die Fotomaske 9 hindurch mit UV-Licht 10 bestrahlt. Bei der Bestrahlung werden die Vernetzungskomponente a) und die photoaktive Substanz b) an den Stellen, die nicht durch die Fotomaske 9 abgedeckt sind, derart kreuzvernetzt, dass sich eine Elektrolytmembran 11 bildet, die an den daran angrenzenden Bereichen der Diffusionsbarrieren 4, der Stress-Kompensationsschichten 5, der Wasserstoffspeicherschichten 6 und der ersten Elektroden 7 anhaftet. In den durch die Fotomaske 9 abgedeckten Bereichen der Beschichtung 8 findet dagegen keine Vernetzung statt.

Nun werden die Fotomaske 9 und die unvernetzten Bereiche der Beschichtung durch Inkontaktbringen mit einem Entwickler von der Festkörperoberfläche entfernt. In Fig. 1H ist erkennbar, dass nun jede der Wasserstoffspeicherschichten 6 jeweils mit einer Elektrolytmembran 11 beschichtet ist und dass die den einzelnen Wasserstoffspeicherschichten 6 zugeordneten Elektrolytmembranen 11 seitlich voneinander beabstandet sind. Die Elektrolytmembranen 11 sind für Protonen durchlässig, lassen jedoch keine Wasserstoffmoleküle durch.

In einem weiteren Verfahrensschritt wird auf der der Wasserstoffspeicherschicht 6 abgewandten Seite der Elektrolytmembran 11 eine für Luft und/oder Sauerstoff durchlässige zweite Elektrode 12 ausgebildet, die als Kathode für die Brennstoffzelle dient. Die zweiten Elektroden 12 werden bevorzugt aus einem Stromkollektor zur elektrischen Rückführung auf das Halbleitersubstrat 2 und einer feinen Platin-Katalysatorschicht auf der Elektrolytmembran 11 aufgebaut. Dadurch sind die zweiten Elektroden 12 für Luft bzw. Luftsauerstoff durchlässig, so dass dieser aus der Atmosphäre zu der zweiten Elektrode 12 gelangen kann. Zur Strukturierung der zweiten Elektroden 12 können mikro-strukturierte Sputtermasken eingesetzt werden, welche mit einem Advanced Slicon-Etching-Tiefenprozess aus beispielsweise 300 µm dicken Silizium-Wafern hergestellt werden können. Die Stegweite der ausgebildeten Lamellenstruktur kann etwa 100 µm betragen.

In Fig. 1I ist erkennbar, dass mehrere in das Halbleitersubstrat 2 integrierte Brennstoffzelle 1 elektrisch in Reihe geschaltet sind. Die zweite Elektrode 12 einer ersten Brennstoffzelle 1 ist dazu elektrisch mit der ersten Elektrode 7 einer zweiten Brennstoffzelle 1 verbunden. Die zweite Elektrode 12 dieser Brennstoffzelle 1 ist wiederum mit der ersten Elektrode 7 einer weiteren Brennstoffzelle 1 verbunden usw

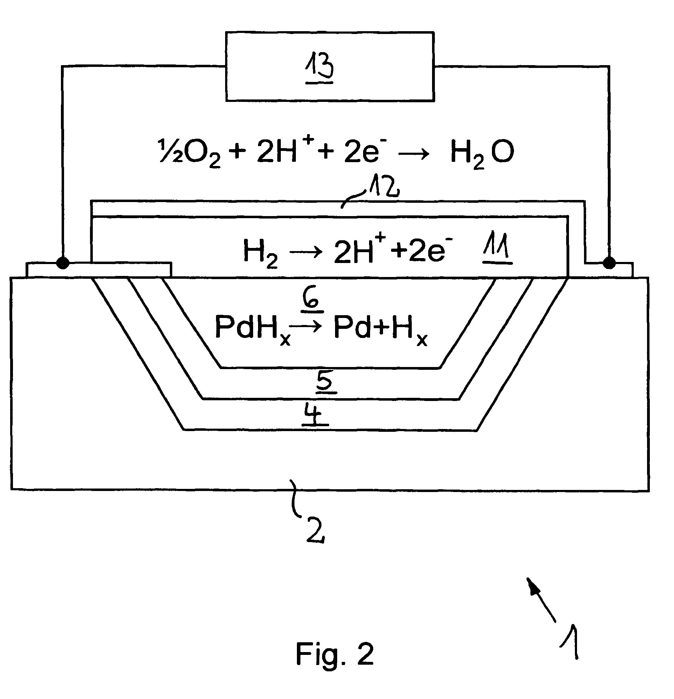

Anhand von Fig. 2 ist die Funktionsweise der Brennstoffzellen 1 ersichtlich. In der Wasserstoffspeicherschicht 6 befindlicher Wasserstoff wird an der Grenzfläche zur Elektrolytmembranen 11 in Protonen H⁺ und Elektronen e⁻ aufgespalten. Die Elektronen gelangen über die erste Elektrode und eine daran angeschlossene elektrische Last 1 3 zur zweiten Elektrode 12. Die Protonen diffundieren durch die Elektrolytmembran 11 hindurch zu der für Luftsauerstoff O₂ durchlässigen zweite Elektrode 12 und reagieren dort unter Freisetzung von Wasser H₂O mit den Elektronen und dem Luftsauerstoff. Zwischen den Elektroden 7, 12 fließt also über die Last 13 ein elektrischer Strom.

## Patentansprüche

1. Verfahren zum Herstellen einer protonenleitfähigen, strukturierten Elektrolytmembran (11), insbesondere für eine Brennstoffzelle (1), wobei auf eine Festkörperoberflöche eine Beschichtung (8) aufgebracht wird,
- wobei die Beschichtung (8) zumindest eine ionenleitfähige, wenigstens eine Säuregruppe aufweisende Vernetzungskomponente und mindestens eine damit zusammenwirkende photoaktive Substanz enthält, wobei die Beschichtung (8) optisch maskiert wird, indem mindestens ein Bereich der Beschichtung, in dem die Elektrolytmembran sein (11) soll, derart belichtet wird, dass die Vernetzungskomponente mit der photoaktiven Substanz zu einem an der Festkörperoberfläche anhaftenden Polymer- und/oder Copolymernetzwerk vernetzt, wobei danach zum Strukturieren der Elektrolytmembran (11) mindestens ein unbelichteter Bereich der Beschichtung (8) entfernt wird,
und/oder
- wobei die Beschichtung (8) zumindest eine ionenleitfähige, wenigstens eine Säuregruppe aufweisende Vernetzungskomponente und mindestens eine damit zusammenwirkende photoaktive Substanz enthält, die nach dem Aufbringen auf die Festkörperoberfläche zu einem an der Festkörperoberfläche anhaftenden, hydophoben Polymer- und/oder Copolymernetzwerk vernetzt werden, wobei die Beschichtung (8) optisch maskiert wird, indem mindestens ein Bereich der Beschichtung, in dem die Elektrolytmembran nicht sein (11) soll, derart belichtet wird, dass er durch eine chemische Reaktion hydrophil wird, wobei danach zum Strukturieren der Elektrolytmembran (11) der mindestens eine belichtete Bereich der Beschichtung (8) entfernt wird,
und/oder
- wobei die Beschichtung (8) zumindest eine ionenleitfähige, wenigstens eine Säuregruppe aufweisende Vernetzungskomponente und mindestens eine damit zusammenwirkende photoaktive Substanz enthält, die nach dem Aufbringen auf die Festkörperoberfläche zu einem an der Festkörperoberfläche anhaftenden, hydophilen Polymer- und/oder Copolymernetzwerk vernetzt werden, wobei die Beschichtung (8) optisch maskiert wird, indem mindestens ein Bereich der Beschichtung, in dem die Elektrolytmembran sein (11) soll, derart belichtet wird, dass er durch eine chemische Reaktion hydrophob wird, wobei danach zum Strukturieren der Elektrolytmembran (11) mindestens ein unbelichteter Bereich der Beschichtung (8) entfernt wird
und/oder
- wobei die Beschichtung (8) zumindest eine ionenleitfähige, wenigstens eine Säuregruppe aufweisende Vernetzungskomponente enthält, die nach dem Aufbringen auf die Festkörperoberfläche zu einem an der Festkörperoberfläche anhaftenden Polymer- und/oder Copolymernetzwerk vernetzt wird, wobei die Beschichtung (8) optisch maskiert wird, indem mindestens ein Bereich der Beschichtung, in dem die Elektrolytmembran nicht sein (11) soll, derart belichtet wird, dass Polymer- und/oder Copolymerketten gebrochen werden, wobei danach zum Strukturieren der Elektrolytmembran (11) der mindestens eine belichtete Bereich der Beschichtung (8) entfernt wird.

2. Verfahren nach Anspruch 1, wobei die Vernetzungskomponente und die mindestens eine photoaktive Substanz in einem Lösungsmittel gelöst auf die Festkörperoberfläche vorzugsweise durch Spin Coating aufgetragen wird, und dass das Lösungsmittel danach zum Bilden der Beschichtung verdunstet wird.

3. Verfahren nach Anspruch 1 oder 2, wobei die Vernetzungskomponente mindestens eine Säuregruppe aufweist, insbesondere eine Sulfonsäuregruppe, eine Phosporsäuregruppe und/oder eine Carbonsäuregruppe aufweist.

4. Verfahren nach einem der Ansprüche 1 bis 3, wobei die Vernetzungskomponente sulfoniertes Polyetherketon und/oder sulfoniertes Polyetheretherketon enthält.

5. Verfahren nach einem der Ansprüche 1 bis 4, wobei die photoaktive Substanz einen Photoinitiator, insbesondere 2,4,6-Trimethylbenzoyldiphenylphosphinoxid enthält.

6. Verfahren nach einem der Ansprüche 1 bis 5, wobei die photoaktive Substanz ein Copolymer enthält, insbesondere Trimethylolpropantriacetat.

7. Verfahren nach einem der Ansprüche 1 bis 6, wobei die Beschichtung eine Haftvermittlerkomponente enthält, vorzugsweise Polybenzimidazol.

8. Verfahren zum Herstellen mindestens einer Brennstoffzelle (1) mit einer Elektrolytmembran nach einem der Ansprüche 1 bis 7, wobei ein Halbleitersubstrat (2) bereitgestellt wird, auf dem eine Wasserstoffspeicherschicht (6) ausgebildet wird, wobei die Elektrolytmembran (11) auf der Wasserstoffspeicherschicht (6) ausgebildet wird und wobei auf der gegenüberliegenden Seite der Elektrolytmembran (1) eine für Luft und/oder Sauerstoff durchlässige Kathode ausgebildet wird.

9. Verfahren nach Anspruch 8, wobei die Beschichtung vor dem Belichten als Folie von der Festkörperoberfläche abgelöst und danach derart auf der zumindest aus dem Halbleitersubstrat (2) und der Wasserstoffspeicherschicht (6) gebildeten Anordnung positioniert wird, dass die Folie die Wasserstoffspeicherschicht (6) flächig überdeckt.

10. Verfahren nach Anspruch 8 oder 9, wobei in dem Halbleitersubstrat (2) eine Kavität oder Grube ausgebildet wird, und wobei die Grube (3) mit der Wasserstoffspeicherschicht (6) befüllt wird.

11. Verfahren nach Anspruch 10, wobei in der Grube (3) eine Stress-Kompensationsschicht (5) aus einem duktilen Metall ausgebildet wird, und wobei die Wasserstoffspeicherschicht (6) auf die Stress-Kompensationsschicht (5) aufgebracht wird.

12. Verfahren nach Anspruch 10 oder 11, wobei in der Grube (3) eine Diffusionsbarriere (4) zum Hemmen oder Sperren des Durchtritts von Wasserstoff ausgebildet wird, und wobei die Wasserstoffspeicherschicht (6) und ggf. die Stress-Kompensationsschicht auf der Diffusionsbarriere (4) ausgebildet wird.

## Claims

1. Method of producing a proton-conductive structured electrolytic membrane (11), particularly for a fuel cell (1), wherein a coating (8) is applied to a solid-body surface,
- wherein the coating (8) contains at least one ion-conductive cross-linking component having at least one acid group and at least one photoactive substance co-operating therewith, wherein the coating (8) is optically masked in that at least one region of the coating in which the electrolytic membrane (11) is to be present is exposed in such a manner that the cross-linking component cross-links with the photoactive substance to form a polymeric and/or copolymeric network adhering to the solid-body surface, wherein thereafter at least one unexposed region of the coating (8) is removed for structuring the electrolytic membrane (11),
and/or
- wherein the coating (8) contains at least one ion-conductive cross-linking component having at least one acid group and at least one photoactive substance co-operating therewith, which after application to the solid-body surface are cross-linked to form a hydrophobic polymeric and/or copolymeric network adhering to the solid-body surface, wherein the coating (8) is optically masked in that at least one region of the coating in which the electrolytic membrane (11) is not to be present is exposed in such a manner that through a chemical reaction it is hydrophilic, wherein thereafter the at least one exposed region of the coating (8) is removed for structuring of the electrolytic membrane (11),
and/or
- wherein the coating (8) contains at least one ion-conductive cross-linking component having at least one acid group and at least one photoactive substance co-operating therewith, which after application to the solid-body surface are cross-linked to form a hydrophilic polymeric and/or co-polymeric network adhering to the solid-body surface, wherein the coating (8) is optically masked in that at least one region of the coating in which the electrolytic membrane (11) is to be present is exposed in such a manner that through a chemical reaction it is hyrdophobic, wherein thereafter at least one unexposed region of the coating (8) is removed for structuring the electrolytic membrane (11),
and/or
- wherein the coating (8) contains at least one ion-conductive cross-linking component having at least one acid group, which after application to the solid-body surface is cross-linked to form a polymeric and/or co-polymeric network adhering to the solid-body surface, wherein the coating (8) is optically masked in that at least one region of the coating in which the electrolytic membrane (11) is not to be present is exposed in such a manner that polymeric and/or co-polymeric chains are broken, wherein thereafter the at least one exposed region of the coating (8) is removed for structuring of the electrolytic membrane (11).

2. Method according to claim 1, wherein the cross-linking component and the at least one photoactive substance dissolved in a solvent are applied to the solid-body surface preferably by spin-coating and that the solvent is thereafter evaporated for formation of the coating.

3. Method according to claim 1 or 2, wherein the cross-linking component comprises at least one acid group, particularly a sulfonic acid group, a phosphoric acid group and/or a carboxylic acid group.

4. Method according to any one of claims 1 to 3, wherein the cross-linking component contains sulfonated polyetherketone and/or sulfonated polyetheretherketone.

5. Method according to any one of claims 1 to 4, wherein the photoactive substance contains a photoinitiator, particularly 2,4,6-trimethylbenzoyldiphenylphosphinoxide.

6. Method according to any one of claims 1 to 5, wherein the photoactive substance contains a copolymer, particularly trimethylolpropanetriacetate.

7. Method according to any one of claims 1 to 6, wherein the coating contains a bonding agent component, preferably polybenzimidazole.

8. Method of producing at least one fuel cell (1) with an electrolytic membrane according to any one of claims 1 to 7, wherein a semiconductor substrate (2) is provided on which a hydrogen storage layer (6) is formed, wherein the electrolytic membrane (11) is formed on the hydrogen storage layer (6) and wherein a cathode permeable to air and/or oxygen is formed on the opposite side of the electrolytic membrane (1).

9. Method according to claim 8, wherein the coating before exposure is detached as a film from the solid-body surface and thereafter positioned in such a manner on the arrangement formed at least from the semiconductor substrate (2) and the hydrogen storage layer (6) that the film covers the hydrogen storage layer (6) in terms of area.

10. Method according to claim 8 or 9, wherein a cavity or pit is formed in the semiconductor substrate (2) and wherein the pit (3) is filled with the hydrogen storage layer (6).

11. Method according to claim 10, wherein a stress compensation layer (5) consisting of a ductile metal is formed in the pit (3) and wherein the water storage layer (6) is applied to the stress compensation layer (5).

12. Method according to claim 10 or 11, wherein a diffusion barrier (4) for obstructing or blocking the passage of hydrogen is formed in the pit (3) and wherein the hydrogen storage layer (6) and optionally the stress compensation layer are formed on the diffusion barrier (4).

## Revendications

1. Procédé de fabrication d'une membrane électrolytique (11) structurée, apte à conduire les protons, en particulier pour une pile à combustible (1), un revêtement (8) étant appliqué sur une surface de corps solide,
- le revêtement (8) contenant un composant de réticulation apte à guider les ions, présentant au moins un groupe acide, et au moins une substance photoactive, coopérant avec lui, le revêtement (8) étant masqué optiquement, en ce qu'au moins une zone du revêtement, dans laquelle la membrane électrolytique (11) doit se trouver, est illuminée de manière que le composant de réticulation réticule avec la substance photoactive, pour donner un réseau polymère et/ou copolymère adhérant à la surface de corps solide, sachant que, ensuite, au moins une zone non illuminée du revêtement (8) est enlevée pour structurer la membrane électrolytique (11),
et/ou
- le revêtement (8) contient au moins un composant de réticulation apte à guider les ions, présentant au moins un groupe acide, et au moins une substance photoactive, coopérant avec lui, qui sont réticulées après l'application sur la surface de corps solide, pour donner un réseau polymère et/ou copolymère hydrophobe, adhérant à la surface de corps solide, le revêtement (8) étant masqué optiquement, en ce qu'au moins une zone du revêtement, dans laquelle la membrane électrolytique (11) ne doit pas se trouver, est illuminée de manière qu'elle soit hydrophile grâce à une réaction chimique, sachant que, ensuite, la au moins une zone illuminée du revêtement (8) est enlevée pour structurer la membrane électrolytique (11),
et/ou
- le revêtement (8) contient au moins un composant de réticulation apte à guider les ions, présentant au moins un groupe acide, et au moins une substance photoactive, coopérant avec lui, qui sont réticulées après l'application sur la surface de corps solide, pour donner un réseau polymère et/ou copolymère hydrophile, adhérant à la surface de corps solide, le revêtement (8) étant masqué optiquement, en ce qu'au moins une zone du revêtement, dans laquelle la membrane électrolytique (11) doit se trouver, est illuminée de manière qu'elle soit hydrophobe grâce à une réaction chimique, sachant que, ensuite, au moins une zone non illuminée du revêtement (8) est enlevée pour structurer la membrane électrolytique (11),
et/ou
- le revêtement (8) contient au moins un composant de réticulation apte à guider les ions, présentant au moins un groupe acide, qui est réticulé après l'application sur la surface de corps solide, pour donner un réseau polymère et/ou copolymère, adhérant à la surface de corps solide, le revêtement (8) étant masqué optiquement, en ce qu'au moins une zone du revêtement, dans laquelle la membrane électrolytique (11) ne doit pas se trouver, est illuminée de manière que les chaînes polymère et/ou copolymère soient rompues, sachant que, ensuite, la au moins une zone illuminée du revêtement (8) est enlevée pour structurer la membrane électrolytique (11).

2. Procédé selon la revendication 1, dans lequel le composant de réticulation et la au moins une substance photoactive, dissous dans un solvant, sont appliqués, de préférence par enduction centrifuge, sur la surface de corps solide, et en ce que le solvant est ensuite évaporé pour former le revêtement.

3. Procédé selon la revendication 1 ou 2, dans lequel le composant de réticulation présente au moins un groupe acide, en particulier un groupe acide sulfonique, un groupe acide phosphorique et/ou un groupe acide carbonique.

4. Procédé selon l'une des revendications 1 à 3, dans lequel le composant de réticulation contient de la polyéthercétone sulfonée et/ou de la polyétheréthercétone sulfonée.

5. Procédé selon l'une des revendications 1 à 4, dans lequel la substance photoactive contient un photoinitiateur, en particulier du 2,4,6-triméthylbenzoyl diphényl phosphine oxyde.

6. Procédé selon l'une des revendications 1 à 5, dans lequel le revêtement contient un copolymère, en particulier du triméthylolpropane triacétate.

7. Procédé selon l'une des revendications 1 à 6, dans lequel le revêtement contient un composant formant agent de pontage, de préférence du polybenzimidazole.

8. Procédé de fabrication d'au moins une pile à combustible (1) avec une membrane électrolytique (11) selon l'une des revendications 1 à 7, dans lequel est fourni un substrat semi-conducteur (2), sur lequel une couche de stockage d'hydrogène (6) est réalisée, la membrane électrolytique (11) étant réalisée sur la couche de stockage d'hydrogène (6) et une cathode, perméable à l'air et/ou à l'oxygène, étant réalisée sur la face opposée de la membrane électrolytique (11).

9. Procédé selon la revendication 8, dans lequel, avant illumination, le revêtement est détaché de la surface de corps solide, sous forme de feuille et, ensuite, positionné sur l'agencement formé au moins du substrat semi-conducteur (2) et de la couche de stockage d'hydrogène (6), de manière que la feuille recouvre en surface la couche de stockage d'hydrogène (6).

10. Procédé selon la revendication 8 ou 9, dans lequel une cavité ou fosse est réalisée dans le substrat semi-conducteur (2), et la fosse (3) est remplie de la couche de stockage d'hydrogène (6).

11. Procédé selon la revendication 10, dans lequel, dans la fosse (3) est réalisée une couche de compensation des contraintes (5) composée d'un métal ductile, et dans lequel la couche de stockage d'hydrogène (6) est appliquée sur couche de compensation des contraintes (5).

12. Procédé selon la revendication 10 ou 11, dans lequel, dans la fosse (3) est réalisée une barrière de diffusion (4) pour entraver ou bloquer le passage d'hydrogène, et dans lequel la couche de stockage d'hydrogène (6) et, le cas échéant, la couche de compensation des contraintes est/son réalisée(s) sur la barrière de diffusion (4).
